# EUROPÄISCHE PATENTANMELDUNG

(11) **EP 3 815 513 A1**
(43) Veröffentlichungstag der Anmeldung: **05.05.2021**
(21) Anmeldenummer: 19206778.3
(22) Anmeldetag: 01.11.2019
(51) Int. Cl.: A01G 9/24, A01G 13/06

(54) **VERFAHREN UND VORRICHTUNG ZUM SCHUTZ EINES GEWÄCHSHAUSES VOR KÄLTE**

(71) Anmelder: Buck, Roman, 88518 Herbertingen (DE)
(72) Erfinder: Buck, Roman, 88518 Herbertingen (DE)
(74) Vertreter: Meyer zu Bexten, Elmar

(57) **Zusammenfassung**

**Aufgabe**

Die der Erfindung zugrunde liegende Aufgabe besteht darin, nach einer Alternative zu bekannten Vorrichtungen und Verfahren zum Frostschutz von Hobbygewächshäusern zu suchen, das die gleichen oder ähnliche Wirkungen hat oder kostengünstiger ist.

**Lösung**

Verfahren zum Schützen eines Gewächshauses vor Kälte, bei dem
das Gewächshaus mit einem Brennstoff (11) beheizt wird,
dadurch gekennzeichnet, dass
eine Software, zum Beispiel eine mobile App, anhand einer vorzugsweise ortsbezogenen Wettervorhersage einen zu deckenden Heizbedarf des Gewächshauses ermittelt und
die Software eine zum Decken des Heizbedarfes erforderliche Menge des Brennstoffes (11) angibt.

## Beschreibung

### Technisches Gebiet

Die Erfindung betrifft ein Erzeugnis und Verfahren gemäß dem ersten Teil der unabhängigen Ansprüche.

### Stand der Technik

Gewerbliche Verkaufs- und Schaugewächshäuser nach dem Stand der Technik umfassen eigene Heizungsanlagen mit entsprechenden Steuerungen, die - je nach Heizungsart - geeignete Leistungs- oder Speichersysteme erfordern. Einschlägige Heizkesselbauarten und anderweitige Heizungssysteme wie Geothermie, Solarthermie und Wärmepumpen werden beleuchtet in SCHRADER, Karl, et al.. Gewächshäuser und Heizungsanlagen im Gartenbau. Stuttgart: Ulmer, 2011. ISBN 3800175827. S.64 ff.

Über derartige Anlagen verfügen kleinere Gewächshäuser, vor allem im Hobbybereich, in aller Regel indes nicht. Zwar sind auch für den Privatgebrauch ausgelegte Heizgeräte am Markt verfügbar, sowohl im Unterhalt als auch in der Anschaffung für den Hobbygärtner jedoch unverhältnismäßig teuer.

DE 2931359 A (REINHOLD MACK GMBH) 19.02.1981 offenbart eine Vorrichtung zur Beheizung bzw. Klimatisierung geschlossener Räume, insbesondere von Hobbygewächshäusern, mittels über einen Ventilator oder ein Gebläse erzwungener Luftströmung von oben zum Fuß- bzw. Gewächshausboden hin sowie in der Luftströmungsbahn angeordneter regelbarer Heizelemente, ausgebildet in Form eines vertikal verlaufenden Luftschachtes mit Lufteintrittsöffnung in Decken- bzw. Firsthöhe, in dem das Gebläse angeordnet ist, wobei der Luftschacht freistehend ausgebildet und nach unten hin durch einen geschlossenen Boden begrenzt ist, die Luftaustrittsöffnung sich unmittelbar oberhalb dieses Bodens an einer der Seitenflächen des Schachtes befindet und Gebläse sowie Heizeinrichtung ebenfalls in Nähe des Bodens der Luftaustrittsöffnung vorgelagert sind.

DE 3932765 A (HOLTWIESCHE, MARKUS) 11.04.1991 beschreibt einen Bio-Wärme-Brüter, ein Verfahren und eine Vorrichtung zur Heizung vornehmlich von Gewächshäusern durch Kompostwärme. Zu diesem Zweck wird die Innenluft z. B. eines Gewächshauses im direkten Kontakt mit dem Kompost erwärmt; der Wärmetransport erfolgt durch Konvektion. Dazu wird die Vorrichtung im Gewächshaus oder als Teil einer Gewächshauswand installiert. Zur guten Belüftung des Kompostmaterials und damit guten Wärmeenergieausbeute wird das Kompostmaterial auf mehrere luftdurchlässige Behälter verteilt, die in einem wärmeisolierten Gehäuse zusammengefasst werden. Die Luft zwischen den Behältern erwärmt sich an diesen und wird durch eine hochliegende Öffnung im Gehäuse direkt in das Gewächshaus geleitet; im Gewächshaus abgekühlte Luft wird durch eine zweite, tiefliegende Öffnung in das Gehäuse zurückgeführt.

DE 102015201508 A (REDWELL MANUFAKTUR GMBH) 10.09.2015 betrifft eine Raumheizungsvorrichtung mit einer inneren Hülle und einer äußeren Hülle, die zumindest teilweise durch über- oder nebeneinander angeordnete Bausteine oder Wandelemente aus feuerfestem Material, insbesondere aus Schamott, Kacheln, Keramik, Ton, Beton, Speckstein oder Kombinationen daraus gebildet werden, wobei die innere Hülle zur Aufnahme einer Wärmequelle und die äußere Hülle zur Wärmeabgabe an den zu beheizenden Raum vorgesehen und zumindest ein Baustein oder Wandelement der inneren Hülle auf seiner der äußeren Hülle abgewandten Seite mit einem Heizelement versehen ist, das eine Trägerplatte und einen darauf angeordneten elektrischen Heizleiter aufweist.

### Kurzbeschreibung der Erfindung

Die beanspruchte Erfindung ist im Folgenden so offenbart, dass die technische Aufgabe, die ihr zugrunde liegt, richtig beurteilt und deren Lösung verstanden werden kann.

### Technische Aufgabe

Die der Erfindung zugrunde liegende Aufgabe besteht darin, nach einer Alternative zu bekannten Vorrichtungen und Verfahren zum Frostschutz zu suchen, das die gleichen oder ähnliche Wirkungen hat oder kostengünstiger ist.

### Technische Lösung

Die Aufgabe wird gemäß dem zweiten Teil der unabhängigen Ansprüche gelöst.

So wird insbesondere ein einfaches Gerät geschaffen, das im günstigsten Fall mit Kerzen oder anderen Brenneinheiten funktioniert. Über der oder den Kerzen steht eine Abdeckung aus wärmespeicherndem Material wie Metall oder Ton. Die Brenneinheit erhitzt die Abdeckung und gibt die Wärme an die Umgebung im Gewächshaus ab.

Um gerade in der Übergangszeit nicht unnötig Energie zu verschwenden, ist eine mobile App oder anderweitige Software vorgesehen, die beispielsweise aus dem Internet die Wettervorhersage abruft, anhand dieser die Frostwahrscheinlichkeit erkennt und dem Nutzer mitteilt, wie viele Brenneinheiten erforderlich sind, um das mit dem besagten Gerät beheizte Gewächshaus frostfrei zu halten. Weitere Parameter, die in die Programmierung der App einfließen können, umfassen etwa Volumen und Innentemperatur des Gewächshauses sowie die Art der dort kultivierten Pflanzen.

### Vorteilhafte Wirkungen

Die Erfindung gestattet es, Hobbygewächshäuser kostengünstig vor Kälte zu schützen.

### Kurze Beschreibung der Zeichnungsfiguren

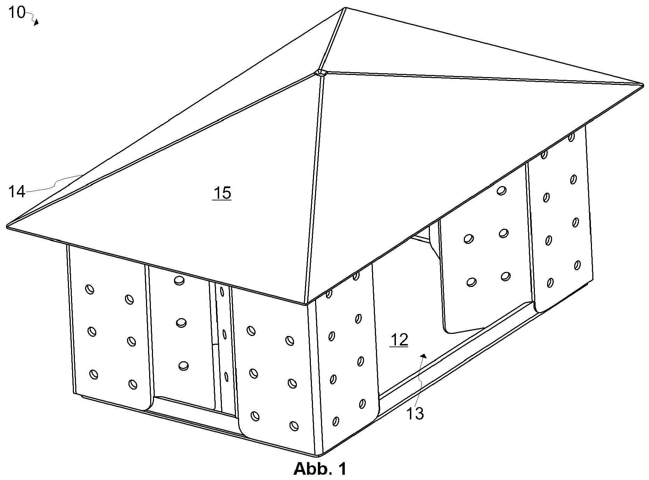

Abbildung 1 ist die Ansicht einer Vorrichtung aus einer ersten Perspektive.

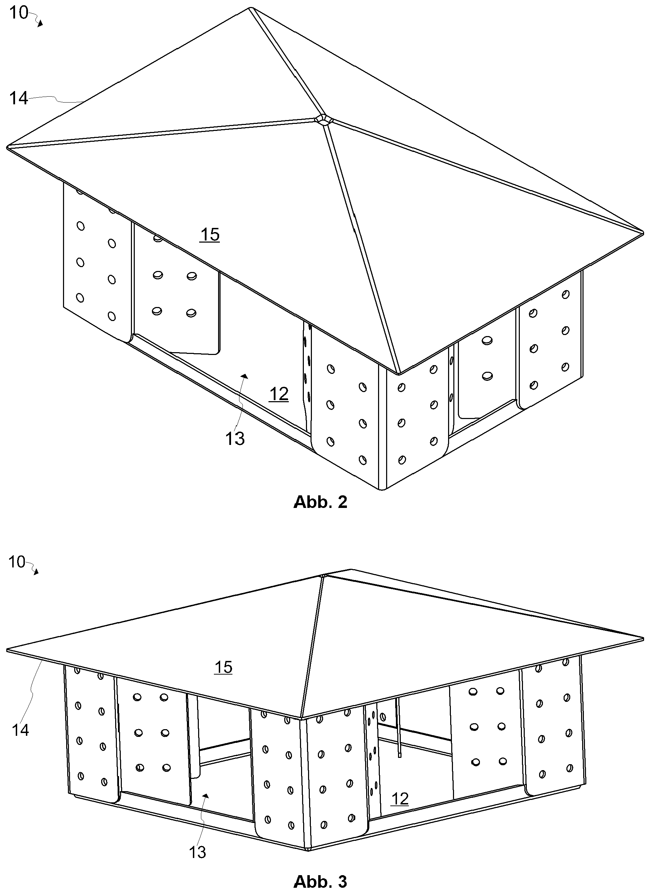

Abbildung 2 ist eine Ansicht der Vorrichtung aus einer zweiten Perspektive.
Abbildung 3 ist eine Ansicht der Vorrichtung aus einer dritten Perspektive.
Abbildung 4 ist eine Vorderansicht der mit Kerzen bestückten Vorrichtung.

### Beschreibung der Ausführungsarten

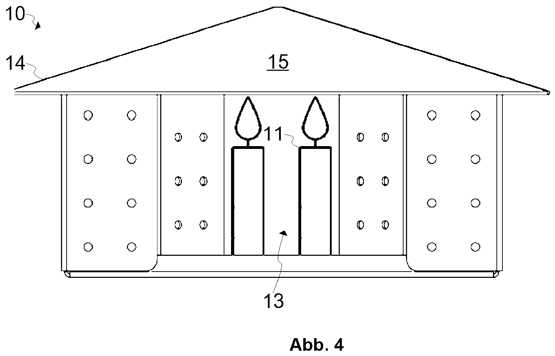

Sämtliche Zeichnungen zeigen eine Vorrichtung (10) zum Schutz eines Gewächshauses vor Kälte mit einer zum Abstellen der Vorrichtung innerhalb des Gewächshauses vorgesehenen rechteckigen Stellfläche und einer Kammer (13) zum Aufnehmen von Kerzen (11 - Abbildung 4) oder einem anderen vorzugsweise festen Brennstoff. Auf ihrer abbildungsgemäß oberen und somit der Stellfläche (12) gegenüberliegenden Seite wird diese Kammer (13) von einer metallischen Abdeckung (14) aus vier zeltdachförmig verbundenen Dachflächen (15) bedeckt.

Es versteht sich, dass die Abdeckung (14) gleichwohl - etwa als geprägtes Rundblech - kuppelförmig oder - etwa als stirnseitig geschlossenes Längssegment eines Rohres - zylindrisch ausgeführt werden kann. Ebenso mag die Abdeckung (14) aus Ton oder einem anderen wärmespeichernden Mineral oder Schichtsilikat bestehen, ohne den Rahmen der Erfindung zu verlassen.

Eine an diese Vorrichtung (10) angepasste und von deren Hersteller angebotene App erlaubt es ihrem Benutzer, die Abmessungen des zu beheizenden Gewächshauses - zum Beispiel durch Angabe von dessen Grund-, Hüllflächen- oder Rauminhalt - sowie einschlägige bauphysikalische Kennwerte voreinzustellen. In Betracht kommen einerseits werkstoffbezogene Kennwerte wie der üblicherweise durch den Koeffizienten *U* bezeichnete Wärmedurchgang der Verglasung und andererseits bauteilbezogene Kennwerte wie die Wärmeleitfähigkeit einer einzelnen Glasscheibe des Gewächshauses. Anstelle eines darauf bezogenen Kennwertes kann auch der Werkstoff selbst - etwa Glas, Plexiglas oder Polycarbonat - aus einem Menü ausgewählt werden.

Ausgehend von der gegenwärtigen Innentemperatur des Gewächshauses ruft die App nach Bedarf eine auf seinen Standort bezogene Wettervorhersage aus dem Internet ab und ermittelt den zu deckenden Heizbedarf in Anbetracht einer vorgegebenen oder durch die App selbst hergeleiteten Solltemperatur. Ein hierzu geeignetes Vorhersagemodell kann beispielsweise mittels maschinellen Lernens trainiert werden und optional die vom Benutzer konfigurierten Pflanzenarten berücksichtigen; so sind Kürbisgewächse beispielsweise wesentlich kälteempfindlicher als die vergleichsweise frostverträglichen Dolden- oder Korbblütler.

Die zur Deckung des Heizbedarfes erforderliche Menge an Brennstoff wird dem Benutzer schließlich als Stückzahl von Kerzen (11 - Abbildung 4), Briketts oder Brennstofftabletten angezeigt. An dieser Stelle mögen verschiedene Formen - etwa Teelichte, Stab- oder Stumpenkerzen - oder Inhaltsstoffe wie Paraffin oder Bienenwachs unterschieden werden.

### Gewerbliche Anwendbarkeit

Die Erfindung ist beispielsweise im Gartenbau anwendbar.

### Liste der Bezugszeichen

10 Vorrichtung
11 Brennstoff, Verbrauchsgut, Kerze
12 Stellfläche
13 Kammer
14 Abdeckung
15 Dachfläche

### Liste der angegebenen Unterlagen

Die vorstehenden Ausführungen nehmen Bezug auf folgende Schriften.

### Patentdokumente

DE 2931359 A (REINHOLD MACK GMBH) 19.02.1981
DE 3932765 A (HOLTWIESCHE, MARKUS) 11.04.1991
DE 102015201508 A (REDWELL MANUFAKTUR GMBH) 10.09.2015

### Nichtpatentliteratur

SCHRADER, Karl, et al. Gewächshäuser und Heizungsanlagen im Gartenbau. Stuttgart: Ulmer, 2011. ISBN 3800175827. S.64 ff.

## Patentansprüche

1. Verfahren zum Schützen eines Gewächshauses vor Kälte, bei dem das Gewächshaus mit einem Brennstoff (11) beheizt wird,
**dadurch gekennzeichnet, dass**
eine Software, zum Beispiel eine mobile App, anhand einer vorzugsweise ortsbezogenen Wettervorhersage einen zu deckenden Heizbedarf des Gewächshauses ermittelt und
die Software, vorzugsweise mithilfe maschinellen Lernens, eine zum Decken des Heizbedarfes erforderliche Menge des Brennstoffes (11) angibt.

2. Verfahren nach Anspruch 1, wobei
die Software die Wettervorhersage aus dem Internet abruft.

3. Verfahren nach Anspruch 1 oder Anspruch 2, wobei
die Menge des Brennstoffes (11) durch eine Stückzahl eines vorbestimmten brennbaren Verbrauchsgutes, zum Beispiel von Kerzen (11), Briketts oder Brennstofftabletten, angegeben wird.

4. Verfahren nach einem der vorangehenden Ansprüche, wobei der Heizbedarf ferner anhand voreingestellter Abmessungen, zum Beispiel Grund-, Hüllflächen- oder Rauminhalt, oder einer gemessenen Innentemperatur des Gewächshauses ermittelt wird.

5. Verfahren nach einem der vorangehenden Ansprüche, wobei der Heizbedarf ferner anhand einer Solltemperatur im Gewächshaus ermittelt wird, welche vorzugsweise die Software anhand voreingestellter Pflanzenarten festlegt.

6. Verfahren nach einem der vorangehenden Ansprüche, wobei der Heizbedarf ferner anhand bauphysikalischer Kennwerte, zum Beispiel des Wärmedurchgangs einer Verglasung oder der Wärmeleitfähigkeit einer Glasscheibe des Gewächshauses ermittelt wird.

7. Vorrichtung (10) zum Schutz eines Gewächshauses vor Kälte mit
einer Stellfläche (12) zum Abstellen der Vorrichtung (10) innerhalb des Gewächshauses und
einer Kammer (13) zum Aufnehmen von vorzugsweise festem Brennstoff (11),
**gekennzeichnet durch**
eine die Kammer (13) gegenüber der Stellfläche (12) bedeckende Abdeckung (14).

8. Vorrichtung (10) nach Anspruch 3, wobei
die Kammer (13) zum Aufnehmen von Kerzen (11) eingerichtet ist.

9. Vorrichtung (10) nach Anspruch 3 oder Anspruch 4, wobei
die Abdeckung (14) aus einem Mineral oder Schichtsilikat, zum Beispiel Ton, besteht.

10. Vorrichtung (10) nach Anspruch 3 oder Anspruch 4, wobei
die Abdeckung (14) metallisch ist.

11. Vorrichtung (10) nach Anspruch 3, Anspruch 4, Anspruch 5 oder Anspruch 6, wobei
die Abdeckung (14) konvex ist.

12. Vorrichtung (10) nach Anspruch 7, wobei
die Abdeckung (14) eine Kuppel, insbesondere ein geprägtes Rundblech, ist.

13. Vorrichtung (10) nach Anspruch 7, wobei
die Abdeckung (14) zylindrisch, insbesondere ein stirnseitig geschlossenes Längssegment eines Rohres, ist.

14. Vorrichtung (10) nach Anspruch 11, wobei
die Abdeckung (14) walmdach-, insbesondere zeltdachförmig, ist.

15. Vorrichtung (10) nach Anspruch 14, wobei
die Stellfläche (12) rechteckig ist und
die Abdeckung (14) vier Dachflächen (15) aufweist.
